# EUROPEAN PATENT SPECIFICATION

(11) **EP 2 918 811 B1**
(45) Date of publication and mention of the grant of the patent: **18.05.2016**
(21) Application number: 15159121.1
(22) Date of filing: 14.03.2015
(51) Int. Cl.: F02D 17/02, F02B 39/14, F02D 41/00

(54) **TURBOCHARGED INTERNAL COMBUSTION ENGINE WITH A "V" CONFIGURATION OF THE CYLINDERS FEATURING THE DEACTIVATION OF A BANK OF CYLINDERS DURING THE LOW-LOAD OPERATION**
Aufgeladene Brennkraftmaschine mit einer V-Konfiguration der Zylinder mit Deaktivierung einer Zylinderreihe bei Teillastbetrieb
Moteur à combustion interne à turbocompresseur avec une configuration en «V» des cylindres permettant la désactivation d'un banc de cylindres pendant le fonctionnement à faible charge

(30) Priority: 14.03.2014 IT BO20140127
(43) Date of publication of application: 16.09.2015
(73) Proprietor: FERRARI S.p.A., 41100 Modena (IT)
(72) Inventor: Medda, Massimo, 41049 SASSUOLO (IT)
(74) Representative: Maccagnan, Matteo

(56) References cited:
- DE-A1-102010 060 110
- US-A1- 2012 143 462
- US-A1- 2014 053 806

## Description

The present invention relates to a turbocharged internal combustion engine with a "V" configuration of the cylinders featuring the deactivation of a bank of cylinders during the low-load operation.

### PRIOR ART

An internal combustion engine for motor vehicles normally comprises a plurality of cylinders, which are either arranged straight on a single bank or are divided into two banks at an angle relative to each other. Generally, engines which have a relatively small displacement (typically up to two liters) have a limited number of cylinders (normally four, but also three or five) arranged straight on a single bank; on the contrary, engines which have a large displacement (more than two liters) have a higher number of cylinders (six, eight, ten or twelve) divided into two banks which are arranged at an angle relative to each other (the angle between the banks is generally comprised between 60° and 180°).

A large displacement engine (more than two liters) can generate a high maximum power, which however is rarely exploited during normal driving on the road; particularly when driving in cities, the engine must generate a very limited power which, in the case of a large displacement engine, is a limited fraction of the maximum (or rated) power. Inevitably, when a high displacement engine delivers limited power (i.e. operates at low load), such a power is delivered with a relatively low energy efficiency and with higher emission of pollutants because the total displacement is greatly oversized.

In an internal combustion engine, it has been suggested to deactivate some (generally half) of the cylinders when the engine is required to generate limited power (i.e. when it operates at low load); in this manner, the cylinders which remain operational may operate in more favorable conditions, thus increasing the total energy efficiency and reducing the emission of pollutants. In particular, one bank (corresponding to half the cylinders in the engine) is deactivated in an internal combustion engine in which the cylinders are divided into two banks arranged at an angle relative to each other; in other words, all and only the cylinders of the same bank are deactivated in internal combustion engines with cylinders arranged in a "V" configuration and divided into two banks during low-load operation.

In accordance with the currently known method, in order to deactivate a cylinder, injection into the cylinder is cut off (i.e. the corresponding injector is not controlled) and both the corresponding intake valves and the corresponding exhaust valves remain closed (the mechanical compression work of the gas inside the cylinders operated during the step of compression is surrendered elastically, minus negligible loss during the step of expansion).

Patent application DE102010060110A1 describes an internal combustion engine comprising a plurality of cylinders which are arranged on two banks, each of which is provided with its own turbocharger, which is independent and separate from the turbocharger of the other bank.

### DESCRIPTION OF THE INVENTION

It is the object of the present invention to supply a turbocharged internal combustion engine with a "V" configuration of the cylinders featuring the deactivation of a bank of cylinders during the low-load operation, which internal combustion engine has high reliability over time and is easy and cost-effective to make at the same time.

According to the present invention, a turbocharged internal combustion engine with a "V" configuration of the cylinders featuring the deactivation of a bank of cylinders during the low-load operation is provided as claimed in the appended claims.

### BRIEF DESCRIPTION OF THE DRAWINGS

The present invention will now be described with reference to the accompanying drawings, which show a non-limitative embodiment thereof, in which:
- figure 1 is a diagrammatic view of a turbocharged internal combustion engine with a "V" configuration of the cylinders featuring the deactivation of a bank of cylinders during the low-load operation object of the present invention; and
- figure 2 is a diagrammatic and longitudinal section view of a turbocharger of the internal combustion engine in figure 1.

### PREFERRED EMBODIMENTS OF THE INVENTION

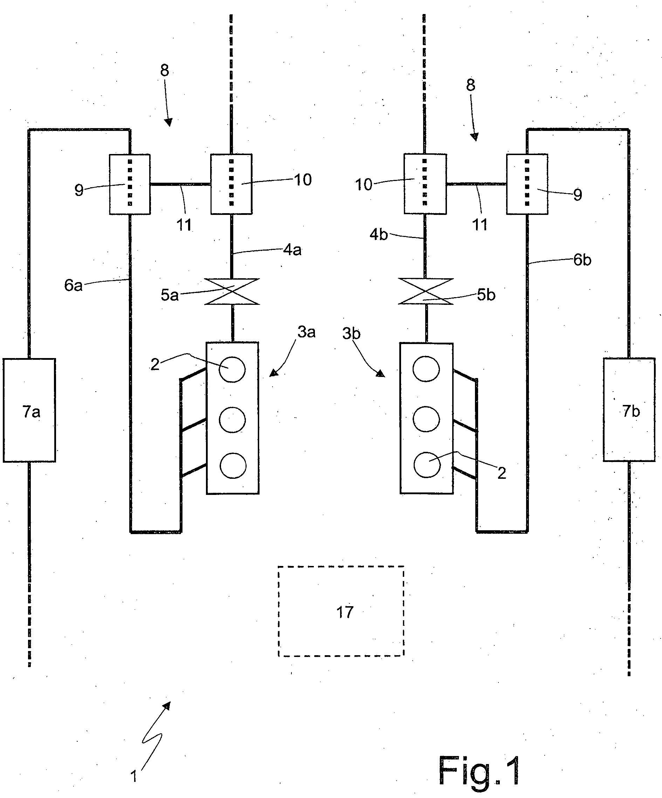

In the figure 1, reference numeral 1 indicates an internal combustion engine for a motor vehicle (not shown) as a whole.

The internal combustion engine 1 comprises six cylinders 2 arranged on two banks 3a and 3b which form an angle of 90° relative to each other (obviously, the number of cylinders 2 and/or the angle between the two banks 3a and 3b could be different). The engine 1 also comprises an intake duct 4a and an intake duct 4b, which are connected to cylinders 2 of bank 3a and to cylinders 2 of bank 3b, respectively, and are controlled by a throttle valve 5a and a throttle valve 5b, respectively. In particular, the cylinders 2 of bank 3a are connected to intake duct 4a by means of a corresponding intake manifold, and the cylinders 2 of bank 3b are connected to intake duct 4b by means of a corresponding intake manifold.

The cylinders 2 of bank 3a are connected to an exhaust conduit 6a by means of a corresponding exhaust manifold, and the cylinders 2 of bank 3b are connected to an exhaust duct 6b by means of a corresponding exhaust manifold. Each exhaust duct 6a or 6b conveys the exhaust gases ejected from the cylinders 2 of its bank 3a or 3b towards a catalytic system 7a or 7b of known type.

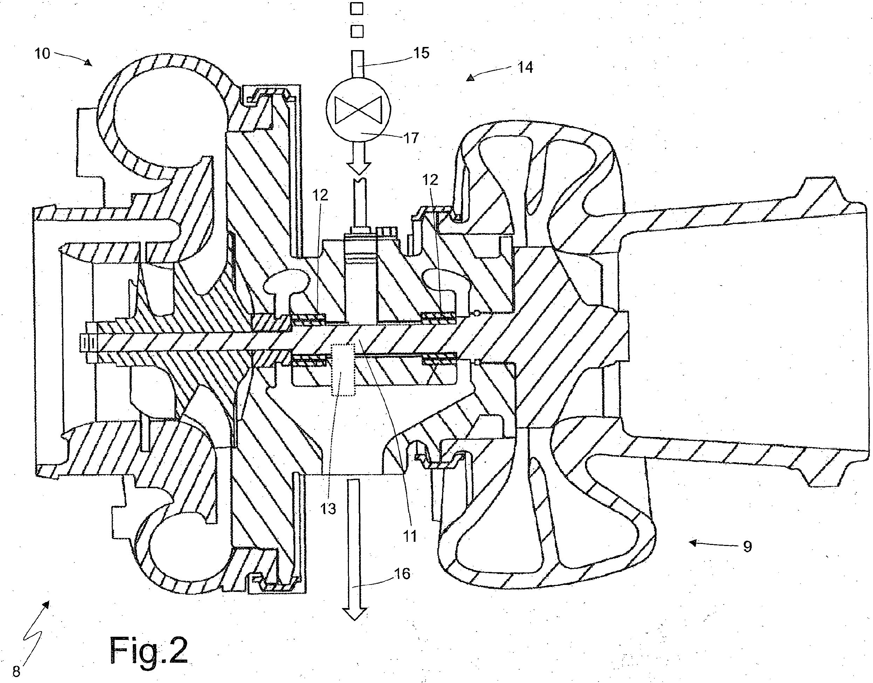

Furthermore, each bank 3a and 3b comprises a corresponding turbocharger 8, which supercharges the fresh intake air to increase the volumetric efficiency of the corresponding cylinders 2 and comprises a turbine 9 arranged along the exhaust duct 6a or 6b or a compressor 10 arranged along the intake duct 4a or 4b. As shown in figure 2, each turbocharger 8 comprises a shaft 11, which is rotationally mounted on bearing 12 thereof and which supports the turbine 9 on one end and supports the compressor 10 on the opposite end. According to a possible, non-binding embodiment, a speed sensor 13 of known type, which detects the rotation speed of the shaft 11 itself, is coupled to each shaft 11.

Each turbocharger 8 comprises a lubrication circuit 14 (only partially and diagrammatically shown in figure 2), which in use feeds lubricating oil under pressure into the turbocharger 8, in particular to maintain the bearings 12 of the shaft 11 (which rotates at very high rotation speeds, in the order of hundreds of thousand revolutions per minute) appropriately lubricated. The lubrication circuit 14 of each turbocharger 8 comprises a lubricating oil delivery duct 15, through which the lubricating oil under pressure is fed into the turbocharger 8, and a return pipe 16, through which the lubricating oil coming from the turbocharger 8 is recirculated. Typically, the lubrication circuits 14 of the turbochargers 8 are connected to the main lubrication circuit of the internal combustion engine 1 with which they share the lubricating oil.

The delivery ducts 15 of the two turbochargers 8 receive lubricating oil under pressure from a lubrication pump (known and not shown), which is normally rotated by the drive shaft of the internal combustion engine 1, and thus is always active when the internal combustion engine 1 is on (i.e. is turning). In each turbocharger 8 in use, the lubricating oil under pressure fed by the corresponding delivery pipe 15 enters into a housing of the bearings 12 (arranged centrally between the turbine 9 and the compressor 10) and thus axially migrates about the shaft 11 in both directions to reach the bearings 12; when the lubricating oil reaches the bearings 12 it is forced to flow through a plurality of lubrication paths arranged about the bearings 12 which end in annular collection spaces arranged about the bearings 12 and from there the lubricating oil descends by gravity into a lower collection sump, from where the return pipe 16 originates.

An electrically actuated shut-off valve 17, which is adapted to open and close the delivery duct 15 to interrupt when necessary the flow of lubricating oil which flows along the delivery duct 15 towards the corresponding turbocharger 8, is arranged along each delivery duct 15.

Finally, as shown in figure 1, the internal combustion engine 1 comprises an electronic control unit 18, which governs the operation of the internal combustion engine 1, and in particular can turn off all and only the cylinders 2 of one of the two banks 3a and 3b when the internal combustion engine 1 is required to generate a limited power (i.e. when the internal combustion engine 1 is in low-load conditions). In this manner, the cylinders 2 which remain active (i.e. the cylinders 2 of the bank 3a or 3b which was not deactivated) may operate in more favorable conditions by increasing the overall efficiency of the internal combustion engine 1 and reducing the emission of pollutants, the delivered power being equal.

During the operation of the internal combustion engine 1, the electronic control unit 18 decides whether to use all cylinders 2 to generate the torque, or whether to turn off (deactivate) some of the cylinders 2 (i.e. all and only the cylinders 2 of one of the two banks 3a and 3b) and therefore use only some of the cylinders 2 (i.e. the cylinders 2 of the bank 3a and 3b which was not deactivated) to generate the torque. Generally, some of the cylinders 2 are deactivated (turned off) when the internal combustion engine 1 is required to generate a limited power and the power request is not expected to increase on the short term.

Preferably, the cylinders 2 of one of the two banks 3a and 3b are deactivated by cutting off the fuel injection and keeping the corresponding intake and exhaust valves closed by means of a deactivation system (known and not shown) of the valves themselves, which deactivation system, for example, could include the use of collapsible tappets, the use of a "cam-changing" device, or the use of collapsible fingers.

When the control unit 18 deactivates the cylinders 2 of one of the two banks 3a or 3b during the low-load operation, the control unit 18 includes cutting off the feeding of lubricating oil to the corresponding turbocharger 8 at the same time by closing the shut-off valve 17; in other words, the control unit 18 interrupts the feeding of lubricating oil to the turbocharger 8, thus closing the shut-off valve 17 when the corresponding bank 3a or 3b of the cylinders 2 is deactivated. Consequently, the control unit 18 interrupts the feeding of lubricating oil to a turbocharger 8 when the corresponding bank 3a or 3b of cylinders 2 is deactivated and reopens the feeding of lubricating oil to the turbocharger 8 when the corresponding bank 3a or 3b of cylinders 2 is reactivated.

According to a possible embodiment, the control unit 18 controls the shut-off valve 17 of the bank 3a or 3b of cylinders 2 which are deactivated in completely independent manner from the actual rotation speed of the shaft 11 of the corresponding turbocharger 8; in this case, the control unit 18 interrupts the feeding of lubricating oil to the turbocharger 8 by closing the shut-off valve 17 after a first interval of time (determined experimentally, stored in a table and generally variable according to the engine point) from the instant of deactivation of the bank 3a or 3b of the cylinders 2 and resuming the feeding of lubricating oil to the turbocharger 8 by opening the shut-off valve 17 after a second interval of time (experimentally determined, stored in a table and variable as a function of the engine point) from the instant of reactivation of the bank 3a or 3b of the cylinders 2. The closing/opening action on the shut-off valve 17 of the corresponding turbocharger 8 is (slightly) delayed with respect to the deactivation/reactivation of the bank 3a or 3b of the cylinders 2 to take the lag (i.e. the inertia) of the turbocharger 8 into account. As mentioned, in this embodiment the actual rotation speed of the shaft 11 of the corresponding turbocharger 8 is not taken into account when a bank 3a or 3b of cylinders 2 is deactivated.

According to an alternative embodiment, the control unit 18 controls the shut-off valve 17 of the bank 3a or 3b of cylinders 2 which bank is deactivated as a function of the actual rotation speed of the shaft 11 of the corresponding turbocharger 8; in this case, the control unit 18 interrupts the feeding of lubricating oil to the turbocharger 8 by closing the shut-off valve 17 when after deactivating the bank 3a or 3b of cylinders 2, the rotation speed of the shaft 11 of the corresponding turbocharger 8 drops under a closing threshold, and the control unit 18 resumes the feeding of lubricating oil by opening the shut-off valve 17 when, after reactivating the bank 3a or 3b of cylinders 2, the rotation speed of the shaft 11 of the corresponding turbocharger 8 rises over an opening threshold.

The control unit 18 may directly determine the rotation speed of the shaft 11 of each turbocharger 8 using the corresponding the speed sensor 13 or in absence of the speed sensor 13, the control unit 18 may indirectly determine the rotation speed of the shaft 11 of each turbocharger 8 using estimation algorithms based, for example, on the air pressure inside the corresponding intake duct 4.

According to a preferred embodiment, the control unit 18 does not always deactivate the same bank 3a or 3b of cylinders 2, but alternates deactivations between the two banks 3a and 3b of cylinders 2 so as to distribute wear symmetrically on both the banks 3a and 3b of cylinders 2; consequently, the lubrication circuits 14 are provided with shut-off valves 17 in both turbochargers 8. Alternatively, the control unit 18 always deactivates the same bank 3a or 3b of cylinders 2, and thus only the lubrication circuit 14 of the corresponding turbocharger 8 is provided with the shut-off valve 17.

The internal combustion engine 1 described above has many advantages.

Firstly, the internal combustion engine 1 described above allows to obtain high reliability of the turbochargers 8 over time by avoiding excessive stress on the turbochargers 8 themselves caused by infiltrations of lubricating oil in zones of the turbochargers 8 in which the lubricating oil should not be present; indeed, it has been observed that the sealing elements of each turbocharger 8 which should confine the lubrication oil and which are arranged at the bearings 12 provide excellent dynamic sealing (i.e. when the shaft 11 rotates), but provide a less effective static sealing (i.e. when the shaft 11 is stationary), thus if the lubricating oil under pressure is fed when the turbocharger 8 is completely stationary (or when the corresponding bank 3a or 3b of cylinders 2 is deactivated) undesired, potentially harmful infiltrations of lubricating oil could occur through the sealing elements. Instead, in accordance with the present invention, the feeding of lubricating oil under pressure to the turbocharger 8 is interrupted when the corresponding bank 3a or 3b of cylinders 2 is deactivated and thus the possibility of undesired, potentially harmful infiltrations of lubricating oil occurring into the turbocharger 8 through the sealing elements when the turbocharger 8 is stopped is entirely avoided.

Furthermore, the internal combustion engine 1 described above is simple and cost-effective to make with respect to a similar known internal combustion engine because the only additional physical elements with respect to a similar known internal combustion engine are the two shut-off valves 17, which have a modest cost.

## Claims

1. An internal combustion engine (1) comprising:
a plurality of cylinders (2), which are arranged in two banks (3a, 3b) arranged at an angle relative to one another;
for each bank (3a, 3b) of cylinders (2), a corresponding turbocharger (8) having a lubrication circuit (14), which comprises a delivery duct (15) to feed lubricating oil under pressure into the turbocharger (8); and
a control unit (18), which is suited to deactivate the cylinders (2) of one of the two banks (3a, 3b) during the low-load operation;
the internal combustion engine (1) is **characterized in that** the control unit (18) interrupts the feeding of lubricating oil to the turbocharger (8), when the corresponding bank (3a, 3b) of cylinders (2) is deactivated.

2. An internal combustion engine (1) according to claim 1, wherein the lubrication circuit (14) of at least one turbocharger (8) comprises a shut-off valve (17), which is arranged along the corresponding delivery duct (15), is suited to open and close the delivery duct (15) so as to interrupt the flow of lubricating oil, and is closed by the control unit (18) when the corresponding bank (3a, 3b) of cylinders (2) is deactivated.

3. An internal combustion engine (1) according to claim 1 or 2, wherein the control unit (18) interrupts the feeding of lubricating oil to a turbocharger (8) when the corresponding bank (3a, 3b) of cylinders (2) is deactivated, and resumes the feeding of lubricating oil to the turbocharger (8) when the corresponding bank (3a, 3b) of cylinders (2) is reactivated.

4. An internal combustion engine (1) according to claim 1, 2 or 3, wherein the control unit (18) determines the rotation speed of a shaft (11) of the turbocharger (8) of the bank (3a, 3b) of cylinders (2) that was deactivated and interrupts the feeding of lubricating oil as a function of said rotation speed.

5. An internal combustion engine (1) according to claim 4, wherein the control unit (18) interrupts the feeding of lubricating oil, when, after the deactivation of a bank (3a, 3b) of cylinders (2), the rotation speed of the shaft (11) of the corresponding turbocharger (8) is below a closing threshold.

6. An internal combustion engine (1) according to claim 4 or 5, wherein the control unit (18) resumes the feeding of lubricating oil, when, after the reactivation of a bank (3a, 3b) of cylinders (2), the rotation speed of the shaft (11) of the corresponding turbocharger (8) exceeds an opening threshold.

7. An internal combustion engine (1) according to claim 4, 5 or 6, wherein each turbocharger (8) comprises a speed sensor (13), which detects the rotation speed of the corresponding shaft (11) and is connected to the control unit (18).

8. An internal combustion engine (1) according to claim 4, 5 or 6, wherein the control unit (18) indirectly determines, by means of an estimation algorithm, the rotation speed of the shaft (11) of a turbocharger (8).

9. A method to control an internal combustion engine (1) comprising:
a plurality of cylinders (2), which are arranged in two banks (3a, 3b) arranged at an angle relative to one another; and
for each bank (3a, 3b) of cylinders (2), a corresponding turbocharger (8) having a lubrication circuit (14), which comprises a delivery duct (15) to feed lubricating oil under pressure into the turbocharger (8);
the control method comprises the step of deactivating the cylinders (2) of one of the two banks (3a, 3b) during the low-load operation;
the control method is **characterized in that** it comprises the further step of interrupting the feeding of lubricating oil to the turbocharger (8), when the corresponding bank (3a, 3b) of cylinders (2) is deactivated.

## Patentansprüche

1. Verbrennungsmotor (1), der aufweist:
mehrere Zylinder (2), die in zwei in einem Winkel relativ zueinander angeordneten Bänken (3a, 3b) angeordnet sind;
für jede Bank (3a, 3b) von Zylindern (2) einen entsprechenden Turbolader (8) mit einem Schmierkreis (14), der eine Abgabeleitung (15) aufweist, um Schmieröl unter Druck in den Turbolader (8) zu führen; und
eine Steuereinheit (18), die geeignet ist, die Zylinder (2) einer der beiden Bänke (3a, 3b) im Niedriglastbetrieb zu deaktivieren;
wobei der Verbrennungsmotor (1) **dadurch gekennzeichnet ist, dass** die Steuereinheit (18) die Schmierölzufuhr zum Turbolader (8) unterbricht, wenn die entsprechende Bank (3a, 3b) von Zylindern (2) deaktiviert ist.

2. Verbrennungsmotor (1) nach Anspruch 1, wobei der Schmierkreis (14) mindestens eines Turboladers (8) ein Absperrventil (17) aufweist, das entlang der entsprechenden Abgabeleitung (15) angeordnet ist, geeignet ist, die Abgabeleitung (15) zu öffnen und zu schließen, um den Schmieröldurchfluss zu unterbrechen, und durch die Steuereinheit (18) geschlossen wird, wenn die entsprechende Bank (3a, 3b) von Zylindern (2) deaktiviert ist.

3. Verbrennungsmotor (1) nach Anspruch 1 oder 2, wobei die Steuereinheit (18) die Schmierölzufuhr zu einem Turbolader (8) unterbricht, wenn die entsprechende Bank (3a, 3b) von Zylindern (2) deaktiviert ist, und die Schmierölzufuhr zum Turbolader (8) wieder aufnimmt, wenn die entsprechende Bank (3a, 3b) von Zylindern (2) reaktiviert ist.

4. Verbrennungsmotor (1) nach Anspruch 1, 2 oder 3, wobei die Steuereinheit (18) die Drehzahl einer Welle (11) des Turboladers (8) der Bank (3a, 3b) von Zylindern (2) bestimmt, die deaktiviert wurde, und die Schmierölzufuhr als Funktion der Drehzahl unterbricht.

5. Verbrennungsmotor (1) nach Anspruch 4, wobei die Steuereinheit (18) die Schmierölzufuhr unterbricht, wenn nach der Deaktivierung einer Bank (3a, 3b) von Zylindern (2) die Drehzahl der Welle (11) des entsprechenden Turboladers (8) unter einem Schließschwellwert liegt.

6. Verbrennungsmotor (1) nach Anspruch 4 oder 5, wobei die Steuereinheit (18) die Schmierölzufuhr wieder aufnimmt, wenn nach der Reaktivierung einer Bank (3a, 3b) von Zylindern (2) die Drehzahl der Welle (11) des entsprechenden Turboladers (8) einen Öffnungsschwellwert übersteigt.

7. Verbrennungsmotor (1) nach Anspruch 4, 5 oder 6, wobei jeder Turbolader (8) einen Geschwindigkeitssensor (13) aufweist, der die Drehgeschwindigkeit der entsprechenden Welle (11) detektiert und mit der Steuereinheit (18) verbunden ist.

8. Verbrennungsmotor (1) nach Anspruch 4, 5 oder 6, wobei die Steuereinheit (18) die Drehgeschwindigkeit der Welle (11) eines Turboladers (8) mit Hilfe eines Schätzalgorithmus indirekt bestimmt.

9. Verfahren zur Steuerung eines Verbrennungsmotors (1), der aufweist:
mehrere Zylinder (2), die in zwei in einem Winkel relativ zueinander angeordneten Bänken (3a, 3b) angeordnet sind; und
für jede Bank (3a, 3b) von Zylindern (2) einen entsprechenden Turbolader (8) mit einem Schmierkreis (14), der eine Abgabeleitung (15) aufweist, um Schmieröl unter Druck in den Turbolader (8) zu führen;
wobei das Steuerverfahren den Schritt des Deaktivierens der Zylinder (2) einer der beiden Bänke (3a, 3b) im Niedriglastbetrieb aufweist;
wobei das Steuerverfahren **dadurch gekennzeichnet ist, dass** es ferner den Schritt des Unterbrechens der Schmierölzufuhr zum Turbolader (8) aufweist, wenn die entsprechende Bank (3a, 3b) von Zylindern (2) deaktiviert ist.

## Revendications

1. Moteur à combustion interne (1) comprenant :
une pluralité de cylindres (2) qui sont agencés dans deux rangées (3a, 3b) agencées à un angle l'une par rapport à l'autre ;
pour chaque rangée (3a, 3b) de cylindres (2), un turbocompresseur (8) correspondant ayant un circuit de lubrification (14) qui comprend un conduit de distribution (15) pour amener l'huile de lubrification sous pression dans le turbocompresseur (8) ; et
une unité de commande (18) qui est appropriée pour désactiver les cylindres (2) de l'une des deux rangées (3a, 3b) pendant le fonctionnement à faible charge ;
le moteur à combustion interne (1) est **caractérisé en ce que** l'unité de commande (18) interrompt l'amenée de l'huile de lubrification au turbocompresseur (8), lorsque la rangée (3a, 3b) correspondante de cylindres (2) est désactivée.

2. Moteur à combustion interne (1) selon la revendication 1, dans lequel le circuit de lubrification (14) d'au moins un turbocompresseur (8) comprend une soupape d'arrêt (17) qui est agencée le long du conduit de distribution (15) correspondant, est appropriée pour ouvrir et fermer le conduit de distribution (15) afin d'interrompre l'écoulement de l'huile de lubrification, et est fermée par l'unité de commande (18) lorsque la rangée (3a, 3b) correspondante de cylindres (2) est désactivée.

3. Moteur à combustion interne (1) selon la revendication 1 ou 2, dans lequel l'unité de commande (18) interrompt l'amenée de l'huile de lubrification à un turbocompresseur (8) lorsque la rangée (3a, 3b) correspondante de cylindres (2) est désactivée, et reprend l'amenée de l'huile de lubrification au turbocompresseur (8) lorsque la rangée (3a, 3b) correspondante de cylindres (2) est réactivée.

4. Moteur à combustion interne (1) selon la revendication 1, 2 ou 3, dans lequel l'unité de commande (18) détermine la vitesse de rotation d'un arbre (11) du turbocompresseur (8) de la rangée (3a, 3b) de cylindres (2) qui a été désactivée et interrompt l'amenée d'huile de lubrification en fonction de ladite vitesse de rotation.

5. Moteur à combustion interne (1) selon la revendication 4, dans lequel l'unité de commande (18) interrompt l'amenée d'huile de lubrification, lorsque, après la désactivation d'une rangée (3a, 3b) de cylindres (2), la vitesse de rotation de l'arbre (11) du turbocompresseur (8) correspondant est inférieure à un seuil de fermeture.

6. Moteur à combustion interne (1) selon la revendication 4 ou 5, dans lequel l'unité de commande (18) reprend l'amenée d'huile de lubrification, lorsque, après la réactivation d'une rangée (3a, 3b) de cylindres (2), la vitesse de rotation de l'arbre (11) du turbocompresseur (8) correspondant dépasse un seuil d'ouverture.

7. Moteur à combustion interne (1) selon la revendication 4, 5 ou 6, dans lequel chaque turbocompresseur (8) comprend un capteur de vitesse (13) qui détecte la vitesse de rotation de l'arbre (11) correspondant et est raccordé à l'unité de commande (18).

8. Moteur à combustion interne (1) selon la revendication 4, 5 ou 6, dans lequel l'unité de commande (18) détermine indirectement, au moyen d'un algorithme d'estimation, la vitesse de rotation de l'arbre (11) d'un turbocompresseur (8).

9. Procédé pour commander un moteur à combustion interne (1) comprenant :
une pluralité de cylindres (2) qui sont agencés dans deux rangées (3a, 3b) agencées à un angle l'une par rapport à l'autre ; et
pour chaque rangée (3a, 3b) de cylindres (2), un turbocompresseur (8) correspondant ayant un circuit de lubrification (14) qui comprend un conduit de distribution (15) pour amener l'huile de lubrification sous pression dans le turbocompresseur (8) ;
le procédé de commande comprend l'étape consistant à désactiver les cylindres (2) de l'une des deux rangées (3a, 3b) pendant le fonctionnement à faible charge ;
le procédé de commande est **caractérisé en ce qu'**il comprend l'étape supplémentaire consistant à interrompre l'amenée d'huile de lubrification au turbocompresseur (8) lorsque la rangée (3a, 3b) correspondante de cylindres (2) est désactivée.
